# FASCICULE DE BREVET EUROPEEN

(11) **EP 3 495 982 B1**
(45) Date de publication et mention de la délivrance du brevet: **03.06.2020**
(21) Numéro de dépôt: 18210828.2
(22) Date de dépôt: 06.12.2018
(51) Int. Cl.: G06F 21/62, H04L 29/06

(54) **PROCÉDÉ DE DÉTECTION D'UNE ATTAQUE INFORMATIQUE CONTRE UNE BASE DE DONNÉES, PRODUIT PROGRAMME D'ORDINATEUR ET SYSTÈME DE DÉTECTION ASSOCIÉS**
VERFAHREN, COMPUTERPROGRAMM-PRODUKT- UND DETEKTIONS-SYSTEM ZUR ERFASSUNG EINES COMPUTER-ANGRIFFS GEGEN EINE DATENBANK
METHOD OF DETECTING COMPUTER ATTACK AGAINST DATABASE, ASSOCIATED COMPUTER PROGRAM PRODUCT AND DETECTION SYSTEM

(30) Priorité: 07.12.2017 FR 1701286
(43) Date de publication de la demande: 12.06.2019
(73) Titulaire: Thales, 92400 Courbevoie (FR)
(72) Inventeur: KHEIR, Nizar, 91767 PALAISEAU Cedex (FR); SANTONI, Lucas, 75014 PARIS (FR)
(74) Mandataire: Lavoix

(56) Documents cités:
- EP-A1- 2 608 481
- US-A1- 2005 203 886
- US-B1- 9 747 455

## Description

La présente invention concerne un procédé de détection d'une attaque informatique contre une base de données.

La présente invention concerne également un produit programme d'ordinateur et un système de détection associés.

En particulier, l'invention s'intéresse à la détection des attaques permettant à un attaquant d'accéder de manière illicite à des données hébergées dans une base de données, et ce à travers une exploitation de failles applicatives au niveau du(es) service(s) web ou de(s) application(s) d'accès qui utilisent cette base.

Ce type d'attaques, communément reconnu sous le nom d'attaques par injection SQL (de l'anglais « Structured Query Language »), conduit à la divulgation ou à l'accès non-autorisé pour un attaquant à des données sensibles dans la base de données.

Il en résulte alors le problème de fuite de données (reconnue dans la littérature sous le nom anglais « Data Leak »). La présente invention apporte ainsi une solution de détection et de protection contre ce type d'attaques, et se positionne donc dans le domaine de protection contre la fuite de données (reconnu dans la littérature sous le nom anglais « Data Leak Protection »).

Une faille de type « injection SQL », c'est-à-dire une faille recherchée par une attaque par injection SQL, peut se produire lorsque des données non-vérifiées sont envoyées, par un utilisateur, à une application d'accès dans le cadre d'une requête, commande, ou tout autre paramètre d'entrée pour l'application.

Un attaquant en mesure d'exploiter une faille de ce type peut envoyer des données « hostiles » qui sont, de fait de la présence de la faille SQL, interprétés par l'application en tant que commande SQL directement relayée et exécutée par la base de données. L'exécution de telles commandes malveillantes permet à l'attaquant d'accéder à des données dans la base de façon non-autorisée, aboutissant ainsi à une fuite de données.

La détection et la prévention des attaques par injection SQL pose de nombreux défis lors du développement des techniques permettant de contrer ces attaques.

Ces défis sont notamment causés par le fait que les failles de type injection SQL ainsi que les signatures des attaques utilisant ces failles restent souvent inconnues à l'exploitant.

On connait de US 9 747 455, EP 2 608 481 et US 2005/203886 des procédés de détection d'une attaque informatique contre une base de données.

Pour remédier à ces problèmes, différentes techniques de l'état de l'art proposent souvent l'utilisation de leurres placés dans la base de données. Il est donc considéré que lorsque ces leurres sont générés de manière appropriée, lors d'une attaque, l'attaquant ne pourrait pas éviter ces leurres en accédant illégitimement dans la base de données. Ainsi, lorsque l'attaquant est confronté à l'un de ces leurres, une alerte pourrait alors être transmise à l'administrateur de la base.

On conçoit que les leurres doivent être soigneusement sélectionnés. En particulier, un bon leurre devrait ne pas éveiller les soupçons de l'attaquant, pouvoir être identifié de manière formelle et ne pas perturber le fonctionnement de l'application d'accès.

Ces trois caractéristiques vont parfois à l'encontre l'une de l'autre. Par exemple, si un leurre n'éveille pas les soupçons de l'attaquant, alors il est certainement moins facilement identifiable du point de vue de l'exploitant. À l'inverse, des leurres difficilement identifiables peuvent conduire à des faux-positifs ou à des mauvais taux de détection.

Ainsi, l'état de la technique n'explicite pas de technique permettant de concilier les trois caractéristiques susmentionnées. Le plus souvent, il est nécessaire d'en sacrifier au moins une au profit des deux autres.

La présente invention a pour but de proposer une technique de détection des attaques notamment de type injection SQL, sans éveiller les soupçons de l'attaquant, capable d'identifier formellement des objets leurrés et tout cela, sans perturber le fonctionnement de l'application d'accès correspondant.

À cet effet, l'invention a pour objet un procédé de détection d'une attaque informatique contre une base de données selon la revendication 1.

Suivant d'autres aspects avantageux de l'invention, le procédé comprend une ou plusieurs des caractéristiques des revendications 2 à 10.

L'invention a également pour objet un produit programme d'ordinateur comportant des instructions logicielles qui, lorsque mises en œuvre par un équipement informatique, mettent en œuvre le procédé tel que défini précédemment.

L'invention a également pour objet un système de détection d'une attaque informatique contre une base de données au moyen de requêtes envoyées à cette base de données par une application d'accès adaptée ;
le système comportant des moyens techniques configurés pour mettre en œuvre le procédé tel que défini précédemment.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système de détection selon l'invention ; et
- la figure 2 est un organigramme d'un procédé de détection selon l'invention, le procédé étant mis en œuvre par le système de détection de la figure 1.

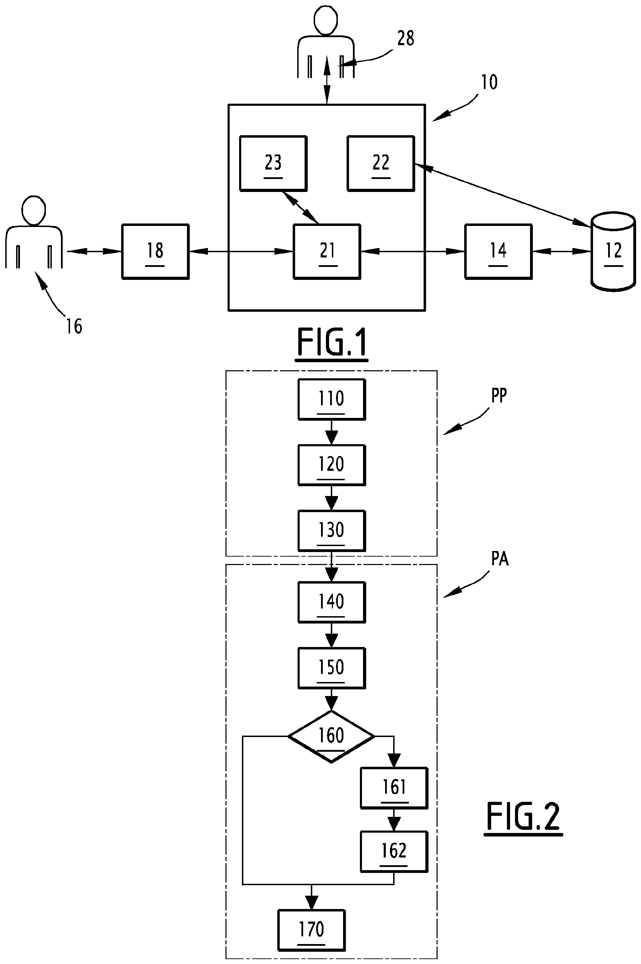

Le système de détection 10 de la figure 1 permet de détecter une attaque informatique contre une base de données 12 au moyen de requêtes envoyées à cette base de données 12 par une application d'accès 14.

Ce type d'attaque est notamment connu sous le terme « attaque par injection SQL ». Toutefois, il doit être compris que l'invention reste applicable pour détecter d'autres attaques similaires, comme par exemple celles qui ne font pas intervenir explicitement les requêtes du langage SQL mais utilisent des requêtes similaires.

Ainsi, au sens de la présente invention, le terme « requête » signifie toute demande formulée en utilisant des données fournies par un utilisateur et envoyée par l'application d'accès 14 à la base de données 12qui a pour but de récupérer au moins une donnée issue de cette base 12.

La base de données 12 présente une base de données relationnelle ou tout autre type de base de données connu en soi. Ainsi, par exemple, cette base 12 est formée par une pluralité de modules de stockage d'informations numériques et/ou de serveurs disposés dans un même endroit géographique ou dans des endroits géographiques différents.

La base de données 12 est composée d'une pluralité de données. Chaque donnée se présente par exemple sous une forme textuelle.

Toutefois, de manière générale, au sens de la présente invention, le terme « donnée » signifie tout élément de toute nature stocké dans la base de données 12.

Au moins certaines des données stockées dans la base de données 12 présentent des données sensibles.

En outre, au moins certaines des données stockées dans la base de données 12 forment des tables de données.

L'application d'accès 14 est par exemple une application web configurée pour formuler des requêtes en utilisant des données fournies par l'utilisateur 16, pour envoyer les requêtes formulées à la base de données 12 et pour recevoir des réponses à ces requêtes envoyées par la base de données 12.

Les données utilisées pour formuler des requêtes sont fournies par l'utilisateur 16 via une interface 18 formée par exemple par un terminal informatique de type adapté. L'interface 18 permet en outre d'afficher à l'utilisateur 16 les données récupérées par l'application d'accès 14 par exemple sous une forme textuelle ou de manière plus générale, d'afficher tout résultat obtenu suite à un traitement de ces données récupérées.

Selon différents modes de réalisation de l'invention, d'autres applications d'accès à la base de données 12 peuvent être également envisagées. Ces applications sont par exemple configurées pour communiquer avec d'autres utilisateurs ou bien avec le même utilisateur 16.

Le système de détection 10 selon l'invention comprend un module d'observation 21, un module de marquage 22 et un module d'évaluation 23.

Chacun de ces modules 21 à 23 se présente au moins partialement sous la forme d'un logiciel mis en œuvre par un calculateur de type adapté. Ces logiciels sont par exemple hébergés dans un même serveur ou dans des serveurs séparés Le ou chacun de ces serveurs est par exemple distant de l'interface 18.

Le module d'observation 21 est configuré pour intercepter tout échange de données s'effectuant entre l'interface 18 de l'utilisateur 16 et l'application d'accès 14. Le module d'observation 21 est configuré ainsi comme un serveur de type « reverse-proxy » dans la mesure où il intervient dans les communication entre l'utilisateur 16 et l'application d'accès 14, tout en étant placé côté application.

En particulier, le module d'observation 21 est configuré pour intercepter toute donnée envoyée par l'utilisateur 16 à l'application d'accès 14 et toute réponse envoyée par l'application d'accès 14 à l'utilisateur 16.

Le module d'observation 21 est configuré en outre pour déterminer l'identité de l'utilisateur en utilisant par exemple sa carte d'identité numérique transmise à l'application d'accès 14.

Le module de marquage 22 est configuré pour communiquer directement avec la base de données 12 notamment pour y stocker des données générées par ce module et/ou pour modifier au moins certaines des données de cette base, comme cela sera expliqué par la suite.

Selon une variante, le module de marquage 22 est configuré pour communiquer avec la base de données 12 comme défini ci-dessus, à travers un(e) ou plusieurs modules ou bases de données intermédiaires.

Finalement, le module d'évaluation 23 est configuré pour communiquer avec le module d'observation 21 notamment pour évaluer le risque d'attaque informatique de la base de données 12 par l'utilisateur 16 comme cela sera expliqué par la suite.

Le procédé de détection selon l'invention mis en œuvre par le système de détection 10 sera désormais expliqué en référence à la figure 2 présentant un organigramme de ses étapes.

Ainsi, en référence à cette figure 2, le procédé de détection comporte une phase préliminaire PP et une phase active PA.

La phase préliminaire PP est mise en œuvre au moins une fois avant une première mise en œuvre de la phase active PA.

La phase préliminaire PP permet de configurer le fonctionnement du système de détection 10. Une telle configuration s'effectue par exemple sous un contrôle d'un administrateur 28 du système 10.

Lors d'une étape initiale 110 de cette phase préliminaire PP, le module de marquage 22 associe à au moins certaines données stockées dans la base de données 12 et/ou destinées à être stockées dans cette base 12, des marquages.

Chaque donnée à laquelle un marquage a été associé, est appelée par la suite donnée marquée.

Au moins certaines des données marquées sont générées par le module de marquage 22 et présentent avantageusement des leurres. Ces leurres sont générés par des méthodes connues en soi, en fonction notamment de la nature des données stockées dans la base de données 12.

De manière générale, par leurre, on comprend une donnée fictive qui a le rôle d'être vue par un éventuel attaquant en tant qu'une donnée régulière de la base de données.

Au moins certaines des données marquées correspondent à des données déjà existantes dans la base de données 12. Ces données peuvent être aussi des leurres préalablement mis dans la base de données 12.

Selon un exemple de réalisation, toutes les données marquées présentent des leurres.

Chaque marquage présente par exemple une suite d'octets identifiables par le module d'observation 21 qui est jointe par exemple à la fin de la donnée à laquelle ce marquage est associé. Dans ce cas, chaque marquage est intégré dans la donnée correspondante.

Avantageusement, dans ce cas, chaque marquage est constitué de caractères non-imprimables comme par exemple des caractères unicodes non-imprimables connus en soi. Ces caractères ne sont donc pas visibles lors de l'affichage de la donnée correspondante à l'utilisateur 16 via par exemple l'interface 18.

Selon un autre exemple de réalisation, chaque marquage est associé à la donnée correspondante par tout autre moyen. Cela peut par exemple être fait en intégrant une référence relative à ce marquage dans la donnée correspondante. Cette référence est identifiable par le module d'observation 21 et composée par exemple de caractères non-imprimables. Dans ce cas, toute transmission de la donnée correspondante s'effectue avec le marquage associé.

Chaque marquage comprend des métadonnées décrivant la donnée marquée correspondante. Ces métadonnées décrivent par exemple la nature de la donnée et/ou le degré de sensibilité de cette donnée.

Selon un aspect avantageux de l'invention, les métadonnées associées à un leurre comprennent également un score attribué à ce leurre en fonction de la nature de la donnée correspondant à ce leurre et/ou de la complexité nécessaire pour accéder à ce leur lorsqu'il est stocké dans la base de données 12, par un attaquant potentiel.

En particulier, selon l'invention, le score d'un leurre présente un niveau de certitude de détection d'une attaque en cours en cas de déclenchement de ce leurre.

Par exemple, un score relativement faible est associé à un leurre destiné à être placé dans une table contenant des données publiques dans la base. En revanche, un score relativement élevé est associé à un leurre destiné à être placé dans une table contenant des mots de passe.

À la fin de cette étape 110, le module de marquage 22 place les données marquées générées par ce module dans la base de données 12 avec les marquages associés. Lorsqu'il s'agit des leurres, le module de marquage 22 distribue ces leurres dans la base de données 12 par exemple de manière aléatoire ou en utilisant des méthodes connues en soi.

En variante ou en complément, au moins certains des leurres sont placés dans la base de données 12 en utilisant la technique de partitionnement de tables dans cette base. Cette technique consiste à partitionner les tables qui contiendront des leurres, de sorte à ce que les données régulières seront toutes placées dans une partition, et les leurres dans une autre partition.

Quant aux données déjà existantes dans la base de données 12, le module de marquage 22 place simplement les marquages associés dans la base 12 ou les intègre dans les données correspondantes.

Lors de l'étape 120 suivante, l'administrateur 28 définit pour le module d'observation 21 une politique de réponses en cas de détection d'une donnée marquée lors de la phase active PA expliquée en détail par la suite.

En particulier, la politique de réponses définit une action exécutable par le module d'observation 21 et relative à la réponse à donner à l'utilisateur 16 en cas de détection d'une donnée marquée lors de la transmission de celle-ci à l'utilisateur 16.

Selon un exemple de réalisation, cette action est choisie par l'administrateur 28 dans le groupe comprenant :
- non-modification de la donnée interceptée correspondante ;
- altération de la donnée interceptée correspondante ;
- remplacement de la donnée interceptée correspondante par une autre donnée ;
- suppression du marquage associé à la donnée interceptée ; et
- modification du marquage associé à la donnée interceptée.

Lors de l'étape 130 suivante, l'administrateur 28 définit pour le module d'observation 21 une politique d'alertes et de contremesures en cas de détection d'une donnée marquée lors de la phase active PA et lorsqu'une alerte ou une contremesure est considérée comme nécessaire.

En particulier, la politique d'alertes et de contremesures définit une action exécutable par le module d'observation 23 en cas de détection d'une donnée marquée lors de la transmission de celle-ci à l'utilisateur 16 et lorsque le module d'évaluation 23 a déterminé qu'une telle alerte ou une telle mesure est nécessaire.

Selon un exemple de réalisation, cette action est choisie par l'administrateur 28 dans le groupe comprenant :
- génération d'une alerte destinée à un exploitant de la base de données et/ou de l'application d'accès ;
- avertissement destiné à l'utilisateur 16 ;
- bannissement de l'utilisateur 16 ;
- génération d'une alerte destinée à au moins certains autres utilisateurs de la base de données 12 et/ou de l'application d'accès 14;
- observation des actions suivantes de l'utilisateur 16 ; et
- combinaison d'au moins deux actions précitées.

En particulier, l'observation des actions suivantes de l'utilisateur 16 consiste à ne pas avertir l'utilisateur au moment en cours et à le laisser continuer à exploiter la base de données 16. Une fois que cette action a été déclenchée, il est possible d'altérer ou de fausser chaque donnée délivrée à l'utilisateur 16 ou même de le rediriger vers une base de données composée uniquement de données fictives. Cette redirection peut être mise en œuvre en utilisant une application d'accès adaptée et différente de l'application d'accès 14.

Selon un exemple de réalisation avantageux de l'invention, l'administrateur 28 choisit plusieurs actions du groupe précité, ces actions devant être exécutées en fonction d'un score associé à l'utilisateur comme cela sera expliqué par la suite.

La phase active PA est mise en œuvre à l'envoi de données correspondantes par l'utilisateur 16 à l'application d'accès 14 pour formuler une requête à la base de données 12 ayant pour but de récupérer une donnée stockée dans cette base de données 12.

Cette phase active PA est donc démarrée lorsque l'utilisateur 16 envoie ces données à l'application d'accès 14 via l'interface 18.

Lors d'une étape initiale 140 de cette phase, le module d'observation 21 intercepte ces données et les transmet à l'application d'accès 14.

L'application d'accès 14 forme la requête correspondante et la transmet à la base de données 12 qui délivre alors la donnée demandée par l'utilisateur 16. Cette donnée est une donnée dépourvue de marquage ou bien une donnée marquée. Dans ce dernier cas, le marquage associé à cette donnée est transmis simultanément avec celle-ci.

L'étape 150 suivante est exécutée lorsque l'application 14 renvoie la donnée à l'utilisateur 16.

Lors de cette étape 150, le module d'observation 21 intercepte cette donnée.

Lors de l'étape 160 suivante, le module d'observation 21 analyse la donnée interceptée pour détecter la présence d'un marquage associé à cette donnée.

Si le module d'observation 21 détecte un marquage associé à cette donnée, il lit les métadonnées correspondantes et les transmet au module d'évaluation 23 avec des informations relatives à l'identité de l'utilisateur 16, lors de l'étape 161.

Selon une variante de réalisation, cette étape 160 est réalisée directement à la sortie de la base de données 12 par exemple par une application adaptée. Dans ce cas, les métadonnées correspondantes et l'identité de l'utilisateur 16 sont transmises au module d'évaluation 23 directement par cette application.

Puis, lors de cette étape 161, le module d'évaluation 23 analyse les métadonnées et l'identité de l'utilisateur et détermine si une alerte ou une contremesure est nécessaire.

Cela est effectué notamment en fonction de la nature de la donnée marquée et du nombre de requêtes envoyées par cet utilisateur 16 qui ont abouti au renvoi d'une donnée marquée.

De plus, lorsque la donnée interceptée est un leurre, le module d'évaluation 23 analyse le score attribué à ce leurre et évalue alors la nécessité d'une alerte ou d'une contremesure en fonction en outre de ce score.

Selon un exemple de réalisation avantageux de l'invention, lors de cette étape, le module d'évaluation 23 associe en outre un score à l'utilisateur 16 en fonction des leurres déjà déclenchés par cet utilisateur 16.

En particulier, lorsque l'utilisateur 16 déclenche un leurre pour une première fois, le module d'évaluation 23 associe un score à cet utilisateur en fonction des métadonnées associées à ce leurre. Il est possible par exemple d'associer à cet utilisateur 16 le même score que celui du leurre correspondant.

À chaque prochain déclenchement d'un leurre par le même utilisateur 16, le score de cet utilisateur 16 est augmenté ou est laissé inchangé par le module d'évaluation 23 en fonction des métadonnées associées à ce nouveau leurre.

Plus particulièrement, selon un exemple, le score de l'utilisateur 16 à chaque nouveau déclenchement d'un leurre est égal :
- à la somme des scores des leurres déclenchés par l'utilisateur 16 ;
- à la valeur maximale des scores des leurres déclenchés par l'utilisateur 16 ;
- à une somme pondérée des scores des leurres déclenchés par l'utilisateur 16, chaque facteur de pondération étant par exemple déterminée en fonction de la nature du leurre correspondant (mot de passe, login, donnée à caractère personnel, donnée à caractère public, etc.) ; ou
- à toute autre fonction numérique déterminées en fonction des scores des leurres déclenchés par l'utilisateur 16 (e.g. norme du vecteur obtenu en concaténant tous les scores des leurres déclenchés).

Ainsi, lorsqu'un score est associé à l'utilisateur 16, la nécessité d'une alerte ou d'une contremesure est déterminée avantageusement en fonction de ce score. Par exemple, lorsque ce score dépasse un seuil de détection prédéterminé, le module d'évaluation 23 détermine qu'une alerte ou une contremesure est nécessaire.

Les scores associés à différents utilisateurs sont par exemple stockés dans le module d'évaluation 23 par exemple de manière temporaire ou dans une base de scores prévue à cet effet.

En variante, le score associé à un utilisateur est intégré dans son identifiant sans que l'utilisateur ne puisse le détecter.

Lorsqu'une alerte ou une contremesure est nécessaire, le module d'évaluation 23 transmet la commande correspondante au module d'observation 21 qui exécute une action conformément à la politique d'alertes et de contremesures et éventuellement, en fonction du score de l'utilisateur 16.

Lors de l'étape 162 suivante, qui peut être également mise en œuvre en parallèle avec l'étape 161 ou avant celle-ci, le module d'observation 21 traite la donnée interceptée pour la transmettre à l'utilisateur.

En particulier, lors cette étape 162, le module d'observation 21 exécute l'action relative à la réponse à donner qui est définie conformément à la politique de réponses.

Ainsi, par exemple, lors de cette étape 162, le module d'observation 21 supprime le marquage associé à la donnée interceptée ou laisse la donnée interceptée inchangée, notamment lorsque le marquage est constitué de caractères non-imprimables.

Finalement, lors de l'étape 170 qui alors exécutée après l'étape 162 ou après l'étape 160 lorsque la donnée interceptée n'est associée à aucun marquage, le module d'observation 21 transmet la donnée interceptée ou la donnée interceptée traitée lorsque l'étape 162 a été mise en œuvre, à l'utilisateur 16.

L'utilisateur 16 reçoit cette donnée via l'interface 18 sans savoir qu'elle a été interceptée par le module d'observation 21.

En fonction de l'action exécutée par le module d'observation 21 lors de l'étape 161, l'utilisateur 16 peut par exemple recevoir un avertissement ou être banni ou encore émettre une nouvelle requête à la base de données 12.

On conçoit que l'invention présente un certain nombre d'avantages.

En effet, selon l'invention, la détection d'une attaque informatique de type injection SQL s'effectue en utilisant des marquages associés à au moins certaines des données stockées dans la base de données.

Ainsi, il n'est pas nécessaire d'avoir des leurres de structure complexe. Même une donnée régulière de la base de données peut être utilisée pour détecter une attaque. Cela permet alors de ne pas éveiller les soupçons de l'attaquant relatifs aux données reçues.

Tout marquage associé à une donnée peut être facilement reconnu par le système de détection. De plus, ce système peut enlever ce marquage pour éviter toute détection de celui-ci par l'attaquant ou le rendre invisible en utilisant des caractères non-imprimables.

De plus, aucune modification de l'application d'accès n'est nécessaire. Celle-ci peut fonctionner de manière complètement indépendante du système de détection.

Finalement, les métadonnées contenues dans chaque marquage et notamment les scores associés aux leurres et éventuellement aux utilisateurs, permettent de rendre le fonctionnement du système de détection particulièrement efficace. De plus, en choisissant de manière appropriée le seuil de détection, il est possible également de configurer le système de manière à avoir un meilleur compromis entre taux de détection et taux de faux positifs.

## Revendications

1. Procédé de détection d'une attaque informatique contre une base de données (12) au moyen de requêtes envoyées à cette base de données (12) par une application d'accès (14) adaptée ;
au moins certaines des données de la base de données (12), dites données marquées, étant associées à des marquages, chaque marquage comprenant des métadonnées décrivant la donnée à laquelle il est associé ;
au moins certaines des données marquées étant des leurres ;
le procédé comprenant une phase active (PA) mise en œuvre à l'envoi de chaque requête par l'application d'accès (14) à la base de donnée (12) afin de récupérer une donnée stockée dans cette base de données (12), chaque requête étant formulée par l'application d'accès (14) à la suite d'une demande correspondante d'un utilisateur (16) ;
la phase active (PA) comprenant les étapes suivantes :
- interception (140) de la donnée envoyée par la base de données (12) en réponse à la requête correspondante ;
- analyse (160) de la donnée interceptée et en cas de détection d'un marquage associé à celle-ci, traitement (162) de la données interceptée conformément à une politique de réponses prédéterminée et lorsqu'une alerte ou une contremesure est nécessaire, exécution (161) d'une action conformément à une politique d'alertes et de contremesures prédéterminée, la nécessité de l'alerte ou de la contremesure étant déterminée en fonction de l'identité de l'utilisateur (16) et des métadonnées du marquage détecté ;
- renvoi (170) à l'utilisateur (16) de la donnée interceptée ou de la donnée interceptée traitée.

2. Procédé selon la revendication 1, dans lequel chaque marquage associé à une donnée est intégré dans cette donnée.

3. Procédé selon la revendication 2, chaque marquage est constitué de caractères non-imprimables.

4. Procédé selon l'une quelconque des revendications précédentes, dans lequel la politique de réponses comprend une action choisie dans le groupe comprenant :
- non-modification de la donnée interceptée correspondante ;
- altération de la donnée interceptée correspondante ;
- remplacement de la donnée interceptée correspondante par une autre donnée ;
- suppression du marquage associé à la donnée interceptée ; et
- modification du marquage associé à la donnée interceptée.

5. Procédé selon l'une quelconque des revendications précédentes, dans lequel toutes les données marquées sont des leurres.

6. Procédé selon l'une quelconque des revendications précédentes, dans lequel les métadonnées d'un leurre comprennent un score attribué en fonction de la nature de ce leurre et/ou de la complexité de ce leurre.

7. Procédé selon la revendication 6, comprenant en outre une étape d'attribution d'un score à l'utilisateur (16) en fonction des scores de l'ensemble des leurres déclenchés par cet utilisateur (16).

8. Procédé selon la revendication 6 et/ou la revendication 7, dans lequel, en cas de détection du marquage d'un leurre, la nécessité de l'alerte ou de la contremesure est déterminée en fonction en outre du score attribué à ce leurre et/ou du score attribué à l'utilisateur (16).

9. Procédé selon l'une quelconque des revendications précédentes, dans lequel la politique d'alertes et de contremesures comprend une action choisie dans le groupe comprenant :
- génération d'une alerte destinée à un exploitant de la base de données (12) et/ou de l'application d'accès (14) ;
- avertissement destiné à l'utilisateur (16) ;
- bannissement de l'utilisateur (16) ; et
- génération d'une alerte destinée à au moins certains autres utilisateurs de la base de données (12) et/ou de l'application d'accès (14);
- observation des actions suivantes de l'utilisateur (16) ; et
- combinaison d'au moins deux actions précitées.

10. Procédé selon l'une quelconque des revendications précédentes, comprenant en outre une phase préliminaire (PP) exécutée au moins une fois avant une première mise en œuvre de la phase active (PA) ;
la phase préliminaire (PP) comprenant les étapes suivantes :
- identification (110) d'un ensemble de données à marquer et association à chacune de ces données d'un marquage la décrivant pour obtenir une donnée marquée ;
- définition (120) de la politique de réponses ;
- définition (130) de la politique d'alertes et de contremesures.

11. Produit programme d'ordinateur comportant des instructions logicielles qui, lorsque mises en œuvre par un équipement informatique, mettent en œuvre le procédé selon l'une quelconque des revendications précédentes.

12. Système de détection (10) d'une attaque informatique contre une base de données au moyen de requêtes envoyées à cette base de données par une application d'accès adaptée ;
le système (10) comportant des moyens techniques configurés pour mettre en œuvre le procédé selon l'une quelconque des revendications 1 à 10.

## Patentansprüche

1. Verfahren zum Detektieren eines Hackerangriffs gegen eine Datenbank (12) mittels an diese Datenbank (12) durch eine angepasste Zugangsanwendung (14) geschickter Anfragen; wobei
mindestens einige der Daten der Datenbank (12), genannt markierte Daten, Kennzeichnungen zugeordnet sind, wobei jede Kennzeichnung Metadaten umfasst, die das Datenelement, dem sie zugeordnet sind, beschreibt;
mindestens einige der markierten Daten Köderdaten sind;
das Verfahren eine aktive Phase (PA) umfasst, die beim Senden jeder Anfrage durch die Zugangsanwendung (14) an die Datenbank (12) durchgeführt wird, um ein in dieser Datenbank (12) gespeichertes Datenelement wiederzugewinnen, wobei jede Anfrage durch die Zugangsanwendung (14) folgend auf eine entsprechende Abfrage eines Benutzers (16) formuliert wird;
die aktive Phase (PA) die folgenden Schritte umfasst:
- Abfangen (140) des von der Datenbank (12) in Antwort auf die entsprechende Anfrage geschickten Datenelementes;
- Analysieren (160) des abgefangenen Datenelementes und falls eine diesem zugeordnete Kennzeichnung detektiert wird, Verarbeiten (162) des abgefangenen Datenelementes entsprechend einer vorbestimmten Antwortverfahrensweise und wenn eine Warnung oder eine Gegenmaßnahme notwendig ist, Ausführen (161) einer Aktion entsprechend einer vorbestimmten Warnungs- und Gegenmaßnahmenverfahrensweise, wobei die Notwendigkeit der Warnung oder der Gegenmaßnahme abhängig von der Identität des Benutzers (16) und der Metadaten der detektierten Kennzeichnung bestimmt wird;
- Zurückschicken (170) des abgefangenen Datenelementes oder des verarbeiteten abgefangenen Datenelementes an den Benutzer (16).

2. Verfahren nach Anspruch 1, bei dem jede einem Datenelement zugeordnete Kennzeichnung in dieses Datenelement integriert ist.

3. Verfahren nach Anspruch 2, wobei jede Kennzeichnung aus nicht druckbaren Zeichen gebildet ist.

4. Verfahren nach einem beliebigen der vorhergehenden Ansprüche, bei dem die Antwortverfahrensweise eine Aktion umfasst, ausgewählt aus der Gruppe umfassend:
- Nicht-Modifizieren des entsprechenden abgefangenen Datenelementes;
- Änderung des entsprechenden abgefangenen Datenelementes;
- Ersetzen des entsprechenden abgefangenen Datenelementes durch ein anderes Datenelement;
- Unterdrücken der dem abgefangenen Datenelement zugeordneten Kennzeichnung; und
- Modifizieren der dem abgefangenen Datenelement zugeordneten Kennzeichnung.

5. Verfahren nach einem beliebigen der vorhergehenden Ansprüche, bei dem alle die markierten Daten Köderdaten sind.

6. Verfahren nach einem beliebigen der vorhergehenden Ansprüche, bei dem die Metadaten eines Köders eine abhängig von der Natur dieses Köders und/oder der Komplexität dieses Köders zugeordnete Punktezahl umfassen.

7. Verfahren nach Anspruch 6, außerdem einen Schritt der Zuweisung einer Punktezahl an den Benutzer (16) abhängig von den Punktezahlen der Gesamtheit der von diesem Benutzer (16) ausgelösten Köderdaten umfassend.

8. Verfahren nach Anspruch 6 und/oder Anspruch 7, bei dem im Fall des Detektierens einer Kennzeichnung eines Köders, die Notwendigkeit der Warnung oder der Gegenmaßnahme außerdem abhängig von der diesem Köder zugewiesenen Punktezahl und/oder von der dem Benutzer (16) zugeordneten Punktezahl bestimmt wird.

9. Verfahren nach einem beliebigen der vorhergehenden Ansprüche, bei dem die Warnungs- und Gegenmaßnahmenverfahrensweise eine Aktion umfasst, ausgewählt aus der Gruppe umfassend:
- Erzeugen einer Warnung, die für einen Betreiber der Datenbank (12) und/oder der Zugangsanwender (14) vorgesehen ist;
- Erzeugen einer Meldung, die für den Benutzer (16) vorgesehen ist;
- Verbannen des Benutzers (16); und
- Erzeugen einer Warnung, die für mindestens einige der anderen Benutzer der Datenbank (12) und/oder der Zugangsanwendung (14) vorgesehen ist;
- Beobachten der darauffolgenden Aktionen des Benutzers (16); und
- Kombinieren von mindestens zwei der zuvor erwähnten Aktionen.

10. Verfahren nach einem beliebigen der vorhergehenden Ansprüche, außerdem eine vorläufige Phase (PP) umfassend, die mindestens einmal vor der Durchführung der aktiven Phase (PA) ausgeführt wird;
wobei die vorläufige Phase (PP) die folgenden Schritte umfasst:
- Identifizieren (110) einer Gesamtheit von zu markierenden Daten und Zuordnen einer Kennzeichnung zu jedem Datenelement dieser Daten, die es zum Erhalten eines markierten Datenelementes beschreibt;
- Definieren (120) der Antwortverfahrensweise;
- Definieren (130) der Warnungs- und Gegenmaßnahmenverfahrensweise.

11. Programmprodukt eines Rechners, das Softwarebefehle aufweist, die, wenn sie durch eine Informatikausrüstung ausgeführt werden, das Verfahren nach einem der vorhergehenden Ansprüche durchführt.

12. System zum Detektieren (10) eines Hackerangriffs gegen eine Datenbank mittels Anfragen, die dieser Datenbank durch eine angepasste Zugangsanwendung gesandt werden;
wobei das System (10) technische Mittel aufweist, die ausgebildet sind, das Verfahren nach einem beliebigen der Ansprüche 1 bis 10 durchzuführen.

## Claims

1. Method for detecting a computer attack against a database (12) by means of requests sent to that database (12) by a suitable access application (14);
at least some of the data of the database (12), called marked data, being associated with markers, each marker comprising metadata describing the datum with which it is associated;
at least some of the marked data being baits;
the method comprising an active phase (PA) which is carried out each time a request is sent by the access application (14) to the database (12) in order to retrieve a datum stored in that database (12), each request being formulated by the access application (14) following a corresponding request by a user (16);
the active phase (PA) comprising the following steps:
- interception (140) of the datum sent by the database (12) in response to the corresponding request;
- analysis (160) of the intercepted datum and, if a marker associated therewith is detected, processing (162) of the intercepted datum in accordance with a predetermined responses policy and, when an alert or countermeasure is necessary, execution (161) of an action in accordance with a predetermined alerts and countermeasures policy, the need for the alert or countermeasure being determined as a function of the identity of the user (16) and of the metadata of the detected marker;
- return (170) to the user (16) of the intercepted datum or of the processed intercepted datum.

2. Method according to claim 1, wherein each marker associated with a datum is integrated in that datum.

3. Method according to claim 2, wherein each marker is composed of non-printable characters.

4. Method according to any one of the preceding claims, wherein the responses policy comprises an action chosen from the group comprising:
- non-modification of the corresponding intercepted datum;
- alteration of the corresponding intercepted datum;
- replacement of the corresponding intercepted datum by another datum;
- deletion of the marker associated with the intercepted datum; and
- modification of the marker associated with the intercepted datum.

5. Method according to any one of the preceding claims, wherein all the marked data are baits.

6. Method according to any one of the preceding claims, wherein the metadata of a bait comprise a score which is attributed as a function of the nature of that bait and/or of the complexity of that bait.

7. Method according to claim 6, further comprising a step of attributing a score to the user (16) as a function of the scores of the totality of the baits triggered by that user (16).

8. Method according to claim 6 and/or claim 7, wherein, if the marker of a bait is detected, the need for the alert or countermeasure is determined as a function further of the score attributed to that bait and/or of the score attributed to the user (16).

9. Method according to any one of the preceding claims, wherein the alerts and countermeasures policy comprises an action chosen from the group comprising:
- generation of an alert for an operator of the database (12) and/or of the access application (14);
- warning for the user (16);
- banning of the user (16); and
- generation of an alert for at least some other users of the database (12) and/or of the access application (14);
- observation of the subsequent actions of the user (16); and
- combination of at least two actions mentioned above.

10. Method according to any one of the preceding claims, further comprising a preliminary phase (PP) which is executed at least once before the active phase (PA) is carried out for the first time;
the preliminary phase (PP) comprising the following steps:
- identification (110) of a set of data to be marked, and association with each of those data of a marker describing it in order to obtain a marked datum;
- definition (120) of the responses policy;
- definition (130) of the alerts and countermeasures policy.

11. Computer program product comprising software instructions which, when carried out by a piece of computer equipment, carry out the method according to any one of the preceding claims.

12. Detection system (10) for detecting a computer attack against a database by means of requests sent to that database by a suitable access application;
the system (10) comprising technical means which are configured to carry out the method according to any one of claims 1 to 10.
